# EUROPÄISCHE PATENTSCHRIFT

(11) **EP 1 253 321 B1**
(45) Veröffentlichungstag und Bekanntmachung des Hinweises auf die Patenterteilung: **15.10.2008**
(21) Anmeldenummer: 02002505.2
(22) Anmeldetag: 02.02.2002
(51) Int. Cl.: F04B 49/02, F04C 29/12, B60G 17/04

(54) **Verfahren zur Steuerung eines Kompressors**
Compressor control system
Système de régulation de compresseur

(30) Priorität: 24.04.2001 DE 10120206
(43) Veröffentlichungstag der Anmeldung: 30.10.2002
(73) Patentinhaber: WABCO GmbH, 30453 Hannover (DE)
(72) Erfinder: Meier, Jörg, 31840 Hessisch Oldendorf (DE); Petry, Carsten, 31008 Elze (DE)
(74) Vertreter: Günther, Constantin

(56) Entgegenhaltungen:
- DE-A- 3 919 407
- DE-C- 19 621 946
- GB-A- 392 116
- US-A- 2 338 451
- US-A- 4 462 610
- US-A- 5 054 995
- US-B1- 6 219 601

## Beschreibung

Die Erfindung betrifft ein Verfahren zur Steuerung eines Kompressors gemäß dem Oberbegriff des Patentanspruchs 1.

Ein derartiges Verfahren dient in der Regel dazu, den Kompressor vor einer Überlastung bzw. überhitzungsbedingten Beschädigungen zu schützen, indem der Kompressor rechtzeitig vor dem Eintreten von Beschädigungen ausgeschaltet wird und ihm so Gelegenheit gegeben wird, wieder abzukühlen. Beschädigungen können z.B. am Druckventil auftreten, etwa infolge einer Materialversprödung und einer sich hieraus ergebenden Oberflächenbeschädigung, die zu Undichtigkeiten am Ventil führt. Des weiteren kann der Kolbenring Schaden nehmen, was zur Zerstörung des Kolbenrings und infolgedessen zu einem Kolbenfresser führen kann.

Aus der DE 196 21 946 C1 ist eine Steueranordnung für einen Kompressor bekannt, bei der aufgrund von Erfahrungswerten ein Schätzwert für die Betriebstemperatur des Kompressors ermittelt wird. Bei Überschreiten eines vorgegebenen Temperaturschwellwertes kann der Kompressor dann automatisch abgeschaltet werden. Des weiteren ist aus der DE 198 12 234 A1 bekannt, die Wärmeübertragungsbedingungen in der Umgebung des Kompressors abzuschätzen, z. B. anhand einer entsprechenden Modellbetrachtung, und in Abhängigkeit dieser Schätzdaten den Kompressor dann zu steuern.

Bei derartigen Verfahren können die realen Temperaturbedingungen an dem Kompressor nur angenähert, d. h. durch Schätzwerte, berücksichtigt werden. Die Ungenauigkeiten bei der Schätzung sind jedoch derart maßgeblich, daß dies bisher zu einer relativ ineffizienten Ausnutzung des Kompressors führte, wenn eine Beschädigung desselben sicher vermieden werden soll. Infolgedessen mußte der Kompressor bisher verhältnismäßig groß dimensioniert werden, was zu erhöhtem Platzbedarf und erhöhten Kosten führt.

Aus der DE 198 10 764 A1 ist ein weiteres Verfahren zur Steuerung eines Kompressors bekannt, bei dem der Kompressor bei Erreichen eines gewissen Temperaturgrenzwertes nicht mehr durchgängig, sondern getaktet betrieben wird, d. h. er wird relativ schnell ein- und wieder ausgeschaltet. Hiermit gehen ein relativ hoher Verschleiß an dem Kompressor sowie eine erhöhte Stromaufnahme eines zum Antrieb des Kompressors dienenden Elektromotors einher. Die erhöhte Stromaufnahme resultiert in erster Linie aus dem Anlaufstrom des Elektromotors, der erheblich höher ist als der Dauerstrom.

Weitere ähnlichen Verfahren sind auch US 2 338 451 A, GB 392 116 A und US 4 462 610 A bekannt.

Der Erfindung liegt daher die Aufgabe zugrunde, ein Verfahren zur Steuerung eines Kompressors anzugeben, das bei guter Ausnutzung des Kompressors häufige Einund Ausschaltvorgänge vermeidet.

Diese Aufgabe wird durch die in dem Patentanspruch 1 angegebene Erfindung gelöst. Vorteilhafte Weiterbildungen und Ausgestaltungen der Erfindung sind in den Unteransprüchen angegeben.

Die Erfindung hat den Vorteil, durch die Abschaltung des Kompressors oberhalb eines Temperaturgrenzwerts eine besonders einfache und überschaubare Steuerung des Kompressors zu ermöglichen. Ein weiterer Vorteil ist, daß der durch die Druckmittelanlage, in welche der Kompressor Druckmittel, z.B. Druckluft, fördern kann, verursachte Gegendruck bei der Festlegung des Temperaturgrenzwerts berücksichtigt wird. Hierdurch läßt sich eine weitere Verbesserung des Schutzes des Kompressors gegen Überlastung bei gleichzeitiger optimaler Ausnutzung des Kompressors erzielen. Letztendlich kann der Kompressor hierdurch kleiner dimensioniert werden.

Ein weiterer Vorteil der Erfindung besteht darin, daß sie für jede Art der Kompressorsteuerung vorteilhaft einsetzbar ist, z.B. für Druckregler- oder Governorregelung, für über eine mechanische Kupplung von einem Antrieb, z.B. einer Brennkraftmaschine, abkoppelbare Kompressoren oder auch für über einen Elektromotor antreibbare Kompressoren. Auf letztere wird im folgenden noch näher eingegangen.

In Verbindung mit einem Elektromotor zum Antrieb des Kompressors hat die Erfindung den weiteren Vorteil, auch den Elektromotor bzw. die besonders beschädigungsgefährdeten Teile wie Bürstenbrücke und Motorwicklungen vor einer überhitzungsbedingten Beschädigung zu bewahren. Insbesondere auch die Isolation der Motorwicklungen kann vor einem Durchschmelzen geschützt werden.

Gemäß einer vorteilhaften Ausgestaltung der Erfindung ist zur Ermittlung der Temperatur ein Temperatursensor vorgesehen. Dies hat den Vorteil, eine weiter verbesserte Ausnutzung des Kompressors zu ermöglichen, da die Temperatur an einer besonders kritischen Stelle des Kompressors über einen Temperatursensor exakt ermittelbar ist und somit keine Schätzung, bei der aus Sicherheitsgründen relativ große Toleranzen berücksichtigt werden müßten, erforderlich ist. Hierdurch kann ein besonders kleiner und kompaktbauender Kompressor eingesetzt werden, der zudem relativ kostengünstig ist.

In einer weiteren vorteilhaften Ausgestaltung der Erfindung ist die Ermittlung des Temperaturwerts über eine thermische Modellbildung auf rechnerischem Wege vorgesehen. Hierdurch kann auch auf den Temperatursensor verzichtet werden. In einer bevorzugten Ausgestaltung der Erfindung sind beide Varianten, Temperatursensor und thermische Modellbildung, vorgesehen, wobei im Normalfall auf das Signal des Temperatursensors zugegriffen wird und nur bei einem Defekt oder einer Störung des Temperatursensors die thermische Modellbildung ersatzweise zur Bestimming des Temperaturwerts herangezogen wird. Hierdurch kann eine besonders gute Betriebssicherheit erzielt werden.

Die Erfindung wird im folgenden unter Nennung weiterer Vorteile anhand eines Ausführungsbeispiels sowie Zeichnungen näher erläutert.

Es zeigen
- Fig. 1: eine schematische Darstellung einer Druckmittelanlage für eine pneumatische Fahrzeugfederung und
- Fig. 2: ein Temperatur-/Zeitdiagramm einer ersten Ausgestaltung der Erfindung und
- Fig. 3: ein Temperatur-/Zeitdiagramm einer zweiten Ausgestaltung der Erfindung.

In den Figuren werden für einander entsprechende Teile und Signale gleiche Bezugszeichen verwendet.

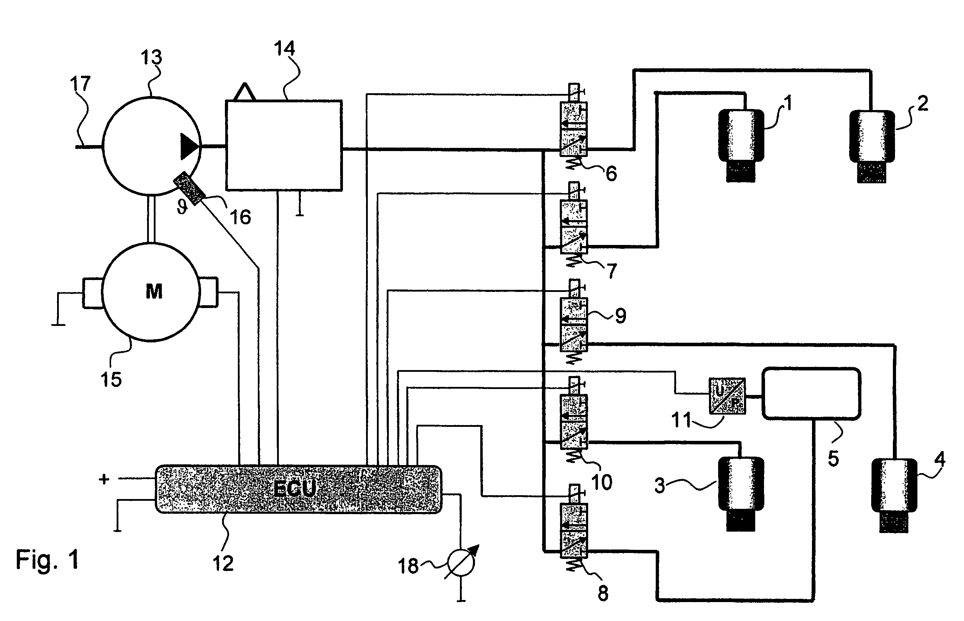

Die in der Fig. 1 dargestellte Luftfederungsanlage für ein Fahrzeug umfaßt vier Luftfederbälge (1, 2, 3, 4), die jeweils ein Rad eines vierrädrigen Fahrzeugs abfedern. Die Luftfederbälge (1, 2, 3, 4) sind über pneumatische Leitungen mit 2/2-Wegeventilen (6, 7, 9, 10) verbunden. Des weiteren ist ein Luftdruckvorratsbehälter (5) vorgesehen, der über eine pneumatische Leitung mit einem weiteren 2/2-Wegeventil (8) verbunden ist. Zur Sensierung des Drucks in dem Vorratsbehälter (5) ist ein Drucksensor (11) mit dem Vorratsbehälter (5) verbunden.

Die Ventile (6, 7, 8, 9, 10) sind druckmittelseitig über weitere pneumatische Leitungen gemeinsam an einen Lufttrockner (14) mit Regenerationsfunktion angeschlossen. Der Lufttrockner (14) weist eine Regenerationsfunktion bekannter Art auf, bei der Druckluft aus den Luftfederbälgen (1, 2, 3, 4) oder dem Vorratsbehälter (5) über die Ventile (6, 7, 8, 9, 10) in den Lufttrockner (14) zurückströmt und über einen Regenerationspfad in die Atmosphäre abgelassen werden kann, wobei Feuchtigkeit abgeführt wird.

Der Lufttrockner (14) ist druckmittelseitig mit einem Kompressor (13), z. B. einem Kolbenkompressor üblicher Bauart, verbunden. Der über eine Welle von einem Elektromotor (15) antreibbare Kompressor (13) saugt über einen Ansauganschluß (17) Luft aus der Atmosphäre an. Durch Einschalten des Elektromotors (15) kann komprimierte Luft erzeugt und an die die Druckmittelanlage (1, 2, 3, 4, 5, 6, 7, 8, 9, 10, 14) darstellende Luftfederungsanlage abgegeben werden.

Die Ventile (6, 7, 8, 9 10) sind als elektromagnetisch betätigbare Ventile ausgebildet und mit ihren elektrischen Anschlüssen einerseits mit der elektrischen Masse verbunden, andererseits mit einem elektronischen Steuergerät (12), das zur Steuerung der nachfolgend noch näher beschriebenen Funktionen dient. Des weiteren ist der Lufttrockner (14) zwecks Aktivierung der Regenerationsfunktion über eine elektrische Leitung mit dem Steuergerät (12) verbunden. Außerdem ist der Elektromotor (15) zur Aktivierung über eine elektrische Leitung mit dem Steuergerät (12) verbunden.

Der Drucksensor (11) sowie ein an einer besonders temperaturempfindlichen Stelle des Kompressors angeordneter Temperatursensor (16) ist über weitere elektrische Leitungen mit dem Steuergerät (12) verbunden. Des weiteren ist mit dem Steuergerät (12) ein z. B. von dem Fahrer des mit der Luftfederungsanlage ausgestatteten Fahrzeuges zu bedienendes Bedienelement (18) verbunden, mit dem die Einstellung verschiedener Fahrzeugniveaus, z.B. eines oberen, eines mittleren und eines unteren Niveaus, möglich ist. Das jeweilige Fahrzeugniveau bzw. die jeweilige Niveaulage an den einzelnen Federbeinen des Fahrzeugs wird über geeignete Wegsensoren gemessen, die in der Fig. 1 der Einfachheit halber nicht dargestellt sind. Diese Wegsensoren bekannter Bauart sind ebenfalls mit dem Steuergerät (12) verbunden.

Das Steuergerät (12) verarbeitet diese Eingangssignale des Drucksensors (11), des Temperatursensors (16), des Bedienelements (18) und der Wegsensoren und erzeugt hieraus Ansteuersignale für den Elektromotor (15), den Lufttrockner (14) sowie die Ventile (6, 7, 8, 9, 10).

Die Luftfederungsanlage gemäß Fig. 1 arbeitet wie folgt:

Wenn das Steuergerät (12) an einem oder mehreren Federbeinen eine Abweichung zwischen der durch den jeweiligen Wegsensor gemessenen Niveaulage und einer Soll-Niveaulage, die aufgrund des Bedienelements (18) bestimmt wird, feststellt, so steuert es das dem Federbein zugeordnete Magnetventil (6, 7, 9, 10) an, wodurch das Ventil von seiner Sperrstellung in einer Durchlaßstellung geschaltet wird. Sofern die Niveaulage erhöht werden soll und somit die Luftmasse in dem Luftfederbalg erhöht werden muß, steuert das elektronische Steuergerät (12) zusätzlich das Magnetventil (8) an, wodurch Druckmittel von dem Vorratsbehälter (5) in den jeweiligen Luftfederbalg (1, 2, 3, 4) strömen kann. Je nach gewünschtem Druck in dem Luftfederbalg und vorhandenem Druck in dem Vorratsbehälter (5) schaltet das Steuergerät (12) gegebenenfalls zusätzlich den Elektromotor (15) ein, wodurch der Kompressor (13) in Betrieb gesetzt wird und ein höheres Druckniveau erzeugt werden kann als in dem Vorratsbehälter noch vorliegt.

Es ist erkennbar, daß bei häufigem Niveauwechsel, z. B. infolge häufiger Betätigung des Bedienelements (18), der Druckluftvorrat in dem Vorratsbehälter (5) aufgebraucht wird und somit Druckluft durch den Kompressor (13) nachgefördert werden muß. Üblicherweise ist der Vorratsbehälter für ein- bis zweimaliges vollständiges Absenken und Anheben des Fahrzeugs dimensioniert.

Falls eine Verminderung der Luftmasse in einem Luftfederbalg notwendig ist, so bleibt das Ventil (8) geschlossen und der Kompressor (13) ausgeschaltet. Des weiteren wird der Lufttrockner (14) in die Regenerationsstellung umgeschaltet, wodurch Druckluft aus dem zu entlüftenden Luftfederbalg in die Atmosphäre strömen kann. Hierbei wird außerdem unerwünschte Feuchtigkeit abgeschieden.

Der Vorratsbehälter (5) dient dazu, wie zuvor schon angedeutet, eine schnelle Erhöhung der Luftmasse in den Luftfederbälgen und somit ein schnelles Anheben der Niveaulage zu ermöglichen. Wegen der vergleichsweise geringen Fördermenge des Kompressors (13) kann dieser nur langsamer eine Luftmassenerhöhung in den Luftfederbälgen bewirken. Daher ist es zweckmäßig, daß der Vorratsbehälter (5) ständig auf einem ausreichenden Druckniveau gehalten wird bzw. bei einem Druckabfall das gewünschte ausreichende Druckniveau möglichst schnell wieder hergestellt wird. Zusätzlich soll aber der Kompressor hierbei nicht überlastet werden und nach Möglichkeit für auch eine angeforderte Niveauerhöhung zur Verfügung stehen. Dies wird in vorteilhafter Weise mit dem nachfolgend beschriebenen Verfahren erreicht.

Bei der zuvor beschriebenen Luftfederungsanlage kann im wesentlichen zwischen zwei Betriebsarten unterschieden werden, nämlich der Betriebsart zum Ausfüllen des Vorratsbehälters (5) und der Betriebsart zum direkten Fördern der komprimierten Luft von dem Kompressor (13) in die Luftfederbälge (1, 2, 3, 4). Bei der Betriebsart des Vorratsbehälter-Auffüllens muß der Kompressor (13) ein relativ hohes Druckniveau erzielen, damit für ein späteres Umfüllen des Druckvorrats von dem Vorratsbehälter (5) in die Luftfederbälge (1, 2, 3, 4) in einer angemessen kurzen Zeitspanne eine ausreichende Druckdifferenz zur Verfügung steht. Da diese Betriebsart von dem Anwender der Luftfederungsanlage nicht unmittelbar wahrgenommen wird, sondern sozusagen im Hintergrund abläuft, kann auch von einer Hintergrundbetriebsart gesprochen werden.

In der anderen Betriebsart des Förderns komprimierter Luft in die Luftfederbälge (1, 2, 3, 4) ist ein vergleichsweise geringerer Druck erforderlich, so daß der Gegendruck der Druckmittelanlage, gegen den der Kompressor (13) arbeiten muß, ebenfalls geringer ist. Zur Unterscheidung zu der zuvor definierten Hintergrundbetriebsart wird diese Betriebsart im folgenden auch als Hauptbetriebsart bezeichnet.

Es gibt somit eine Hintergrundbetriebsart mit einem hohen Gegendruck und eine Hauptbetriebsart mit einem niedrigen Gegendruck. Es hat sich gezeigt, daß die kritische Temperatur bzw. die Temperaturgrenze zum Ausschalten des Kompressors, zur Vermeidung einer Beschädigung des Kompressors, von diesem Gegendruck beeinflußt wird. So ist bei niedrigen Gegendrücken ein höherer Temperaturgrenzwert zulässig als bei hohen Gegendrücken. Der Grund hierfür liegt an einem unterschiedlichen Erwärmungsverhalten anderer, kritischer Bauteile, wie z. B. einem in dem Kompressor zur Druckbegrenzung angeordneten Druckventil oder der Bürstenbrücke des Elektromotors. Erfindungsgemäß ist daher vorteilhaft vorgesehen, den Temperaturgrenzwert abhängig von dem Gegendruck zu gestalten. Dies kann einerseits durch Verwendung eines Drucksensors, über den der Gegendruck gemessen wird, erfolgen.

In einer vorteilhaften Ausgestaltung der Erfindung kann auf diesen Drucksensor verzichtet werden, indem zwischen diskreten Betriebsarten unterschieden wird und diesen Betriebsarten entsprechende Temperaturgrenzwerte (T**₂**, T**₄**) zugeordnet werden. Da in den Betriebsarten die jeweiligen Gegendrücke der Druckmittelanlage bekannt oder auf einfache Weise bestimmbar sind, können diese Temperaturgrenzwerte (T**₂**, T**₄**) sehr einfach durch Versuche ermittelt werden.

Im folgenden sei angenommen, daß die zwei diskreten Betriebsarten die Hauptbetriebsart und die Hintergrundbetriebsart sind.

In einer vorteilhaften Ausgestaltung der Erfindung wird der Temperaturgrenzwert (T**₂**) der Hintergrundbetriebsart bewußt deutlich niedriger gewählt, als es zur Vermeidung von Beschädigungen an dem Kompressor (13) oder dem Elektromotor (15) notwendig wäre. Hierdurch werden Kompressor (13) und Elektromotor (15) auf einer geringeren Temperatur während des Vorratsbehälter-Auffüllens gehalten, so daß für die Hauptbetriebsart des Auffüllens der Luftfederbälge sofort und ohne Abkühlpause eine gewisse Laufzeit dieser Elemente zur Verfügung steht. Dies hat den Vorteil, daß die Luftfederungsanlage für den Anwender gut verfügbar ist und das Auffüllen des Vorratsbehälters (5) im Hintergrund läuft, ohne die Verfügbarkeit für die Niveauverstellungen spürbar zu reduzieren. Dieses ist insbesondere dann wichtig, wenn der Druck in dem Vorratsbehälter (5) derart gering ist, daß der Vorratsbehälter (5) zum Anheben des Fahrzeuges noch nicht zugeschaltet werden kann und das Anheben somit über den Kompressor (13) erfolgen muß.

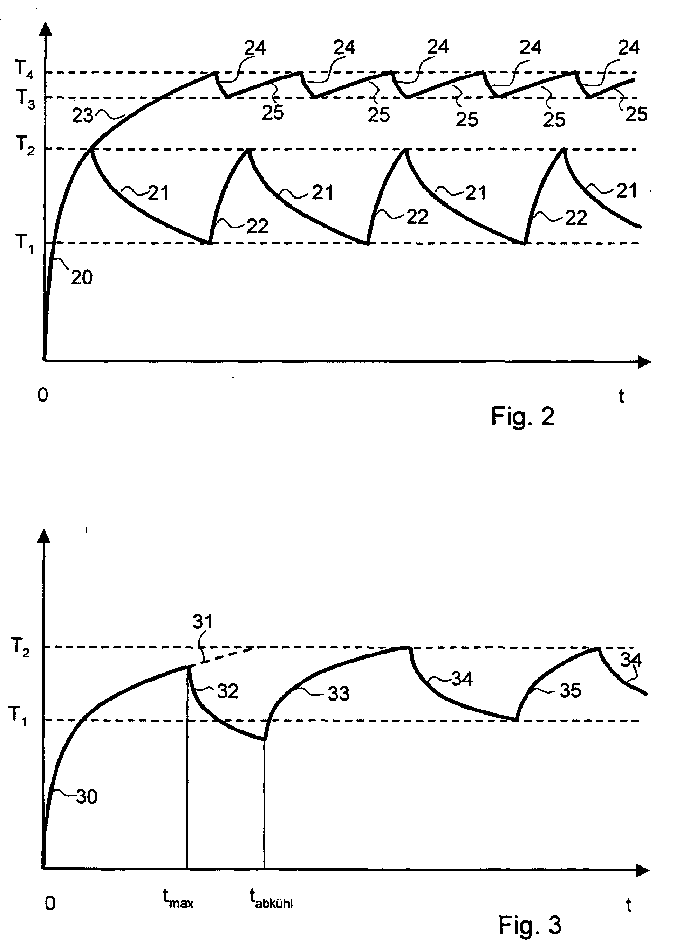

Der zuvor beschriebene Sachverhalt soll nun anhand der Fig. 2 näher erläutert werden. Die Fig. 2 zeigt ein Temperatur-/Zeitdiagramm des Temperatursignals (T) des Temperatursensors (16) während eines bestimmten Zeitraumes. Ausgehend vom Zeitpunkt 0, zu dem der Kompressor (13) erstmalig in Betrieb gesetzt wird, steigt das Temperatursignal (T) gemäß Linie (20) nach einer Exponentialfunktion an.

Geht man zunächst einmal von der Hintergrundbetriebsart aus, so ist als Temperaturgrenzwert der Wert (T**₂**) wirksam, so daß beim Erreichen dieses Wertes der Kompressor (13) wieder abgeschaltet wird. Demzufolge verringert sich das Temperatursignal (T) gemäß Linie (21). Als Wiedereinschalttemperatur ist in diesem Fall der Wert (T**₁**) wirksam, so daß nach Abkühlung auf dieses untere Temperaturniveau der Kompressor (13) wiederum eingeschaltet wird. Danach erhöht sich die Temperatur gemäß Linie (22). Daraufhin erfolgt ein wechselweises Ausund Wiedereinschalten des Kompressors (13), wie anhand des durch die Linien (21, 22) dargestellten Temperaturverlaufs ersichtlich ist.

Bei der Hauptbetriebsart erhöht sich die Temperatur im Anschluß an die Linie (20) weiterhin gemäß Linie (23), bis der für diese Betriebsart wirksame Temperaturgrenzwert (T**₄**) erreicht ist. Sodann erfolgt ein Abschalten des Kompressors, was einen Temperaturabfall gemäß Linie (24) zur Folge hat. Bei Erreichen der hier wirksamen Wiedereinschalttemperatur (T**₃**) wird der Kompressor wieder eingeschaltet, die Temperatur erhöht sich gemäß Linie (25), bis wiederum der Temperaturgrenzwert (T**₄**) erreicht ist. Sodann erfolgt ein wechselweises Aus- und Wiedereinschalten des Kompressors (13), wie anhand des durch die Linien (24, 25) dargestellten Temperaturverlaufs ersichtlich ist.

Wie aus der Fig. 2 auch hervorgeht, ist die Temperaturhysterese, d.h. der Abstand zwischen dem Temperaturgrenzwert und dem derselben Betriebsart zugeordneten Wiedereinschalttemperatur, für die Hintergrundbetriebsart deutlich größer gewählt als für die Hauptbetriebsart. Dies führt zu einem selteneren Wechsel zwischen den Betriebszuständen ein- und ausgeschalteter Kompressor (13), was den Vorteil hat, daß die Einschalthäufigkeit des Kompressors (13) und damit auch dessen Verschleiß reduziert wird. Außerdem führt dies zu einer Stromeinsparung, da die hohen Anlaufströme des Elektromotors (15) weniger oft auftreten. Die vergleichsweise geringere Temperaturhysterese der Hauptbetriebsart hat für diese Betriebsart den Vorteil, daß die Pausenzeiten zur Abkühlung des Elektromotors relativ gering sind, so daß einem Anwender der Luftfederungsanlage ein spürbarer Fortschritt beim Erhöhen der Niveaulage geboten wird.

In der Fig. 3 ist eine vorteilhafte Ausgestaltung der Erfindung dargestellt, bei der den Temperatursignal-abhängigen Abschaltkriterien für den Kompressor (13) noch Zeitkriterien unterlagert sind. Beginnend vom Zeitpunkt 0 an steigt das Temperatursignal (T) an dem erstmalig eingeschalteten Kompressor (13) gemäß der Linie (30) an. Das Temperatur-Abschaltkriterium würde erst bei dem Temperaturgrenzwert (T**₂**) erreicht werden. Der entsprechende Temperaturverlauf bis zu dem Temperaturgrenzwert (T**₂**) ist durch die gestrichelte Linie (31) dargestellt. Jedoch bereits zu dem Zeitpunkt (t**ₘₐₓ**) ist ein Zeitdauer-Grenzwert für das Ausschalten des Kompressors (13) erreicht. Diese vorzeitige Ausschaltung des Kompressors hat z. B. bei kaltem Kompressor den Vorteil, daß das Druckventil besonders geschont wird, da dieses dann schneller eine kritische Temperatur erreicht als es von dem Temperatursignal (T), welches z. B. die Zylinderkopftemperatur des Kompressors (13) erfaßt, angezeigt wird. Da die Zylinderkopftemperatur bei niedrigen Umgebungstemperaturen nicht so schnell ansteigt wie die Temperatur des Druckventils, kann durch das zuvor beschriebene zeitliche Ausschaltkriterium das Druckventil besser geschützt werden.

Zusammenfassend kann also gesagt werden, daß durch den Zeitdauer-Grenzwert (t**ₘₐₓ**) die maximale Laufzeit des Kompressors (13) am Stück begrenzt wird.

Nach Ausschalten des Kompressors (13) über das Zeitkriterium verringert sich das Temperatursignal (T) gemäß der Linie (32). Bei reinen Temperaturkriterien würde ein Wiedereinschalten des Kompressors (13) bei Erreichen der Wiedereinschalttemperatur (T**₁**) erfolgen, also bereits nach einer relativ kurzen Abkühlzeit. Das Wiedereinschalten erfolgt gemäß Fig. 3 jedoch ebenfalls nach einem Zeitkriterium, nämlich wenn eine vordefinierte Abkühlzeit (t**_{abkühl}**) erreicht ist. Erst zu diesem Zeitpunkt wird der Kompressor (13) wieder eingeschaltet, was im Temperaturverlauf an der Linie (33) erkennbar ist. Durch dieses spätere Wiedereinschalten des Kompressors wird eine Abkühlung auf ein unterhalb der Wiedereinschalttemperatur (T**₁**) liegendes Temperaturniveau erzielt, wodurch sich die anschließende zulässige Laufzeit des Kompressors (13) entsprechend verlängert.

Die überlagerte Steuerung nach Zeitkriterien wird vorzugsweise bei niedrigen Außentemperaturen angewandt, d.h. wennn die Temperatur am Zylinderkopf des Kompressors (13) aufgrund einer guten Wärmeabfuhr an die Umgebung bei eingeschaltetem Kompressor (13) nur langsam steigt und bei ausgeschaltetem Kompressor (13) schnell wieder sinkt. In diesem Fall wirkt die Steuerung nach Zeitkriterien unterstützend hinsichtlich einer Reduzierung der Einschalthäufigkeit des Kompressors (13), ohne die Verfügbarkeit zu reduzieren. Gemäß einer vorteilhaften Ausgestaltung der Erfindung muß die Umgebungstemperatur hierbei nicht gesondert sensiert werden, sondern kann indirekt auf rechnerischem Wege aus dem mittels des Temperatursensors (16) ermittelten Temperaturverlauf am Zylinderkopf ermittelt werden.

Die Zeitkriterien zum Ausschalten (t**ₘₐₓ**) und zum Wiedereinschalten (t**_{abkühl}**) berücksichtigt das elektronische Steuergerät (12) in diesem Fall vorrangig zu dem Temperaturgrenzwert (T**₂**) und der Wiedereinschalttemperatur (T**₁**). Dies bedeutet, daß nach Ablauf des Zeitdauer-Grenzwerts (t**ₘₐₓ**) der Kompressor (13) abgeschaltet wird, auch wenn der Temperaturgrenzwert (T**₂**) noch nicht erreicht ist. Ein Wiedereinschalten des Kompressors (13) erfolgt erst nach Ablauf der vordefinierten Abkühlzeit (t**_{abkühl}**), auch wenn hierbei die Wiedereinschalttemperatur (T**₁**) unterschritten wird.

## Patentansprüche

1. Verfahren zur Steuerung eines Kompressors (13), der zur Druckmittelförderung in eine Druckmittelanlage (1, 2, 3, 4, 5, 6, 7, 8, 9, 10, 14) geeignet ist, wobei die Förderung des Druckmittels in die Druckmittelanlage (1, 2, 3, 4, 5, 6, 7, 8, 9, 10, 14) in Abhängigkeit von einem Temperatursignal (T) ein- und ausschaltbar ist, wobei die Druckmittelförderung ausgeschaltet wird, wenn das Temperatursignal (T) einen Temperaturgrenzwert (T₂) überschreitet, **dadurch gekennzeichnet, dass** der Temperaturgrenzwert (T₂) in Abhängigkeit von dem von der Druckmittelanlage (1, 2, 3, 4, 5, 6, 7, 8, 9, 10, 14) verursachten Gegendruck festgelegt wird.

2. Verfahren nach Anspruch 1, **dadurch gekennzeichnet, daß** wenigstens zwei diskrete Temperaturgrenzwerte (T₂, T₄) vorgesehen sind.

3. Verfahren nach Anspruch 2, **dadurch gekennzeichnet, daß** die diskreten Temperaturgrenzwerte (T₂, T₄) bestimmten Betriebsarten des Kompressors (13) und/oder der Druckmittelanlage (1, 2, 3, 4, 5, 6, 7, 8, 9, 10, 14) zugeordnet sind.

4. Verfahren nach Anspruch 2 oder 3, **dadurch gekennzeichnet, daß** eine Hauptbetriebsart und eine Hintergrundbetriebsart vorgesehen ist, und daß in der Hintergrundbetriebsart der dieser Betriebsart zugeordnete Temperaturgrenzwert (T₂) geringer ist als der infolge des Gegendrucks theoretisch zulässige Grenzwert.

5. Verfahren nach einem der Ansprüche 2 bis 4, **dadurch gekennzeichnet, daß** der Kompressor (13) bei Erreichen eines Zeitdauer-Grenzwertes (tₘₐₓ) ausschaltbar ist.

6. Verfahren nach einem der vorhergehenden Ansprüche, **dadurch gekennzeichnet, daß** ein Wiedereinschalten des Kompressors (13) nach einem Ausschaltvorgang nach Abkühlung auf eine vorgegebene Wiedereinschalttemperatur (T₁, T₃) und/oder nach Ablauf einer vorgegebenen Abkühlzeit (t_{abkühl}) erfolgt.

7. Verfahren nach Anspruch 6, **dadurch gekennzeichnet, daß** die Wiedereinschalttemperatur (T₁, T₃) und/oder die Abkühlzeit (t_{abkühl}) in Abhängigkeit von der Betriebsart festlegbar ist.

8. Verfahren nach einem der vorhergehenden Ansprüche, **dadurch gekennzeichnet, daß** das Temperatursignal (T) durch eine Temperatursensor (16) ermittelt wird.

9. Verfahren nach einem der vorhergehenden Ansprüche, **dadurch gekennzeichnet, daß** das Temperatursignal (T) durch ein thermisches Modell rechnerisch ermittelt wird.

10. Elektronisches Steuergerät (12), welches ein Verfahren nach einem der vorhergehenden Ansprüche ausführt.

## Claims

1. Method of controlling a compressor (13) suitable for delivering pressure medium to a pressure medium system (1, 2, 3, 4, 5, 6, 7, 8, 9, 10, 14), the delivery of the pressure medium to the pressure medium system (1, 2, 3, 4, 5, 6, 7, 8, 9, 10, 14) being activatable and deactivatable in dependence upon a temperature signal (T), the delivery of pressure medium being deactivated when the temperature signal (T) crosses a temperature limit value (T₂), **characterized in that** the temperature limit value (T₂) is determined in dependence upon the counter-pressure created by the pressure medium system (1, 2, 3, 4, 5, 6, 7, 8, 9, 10, 14).

2. Method according to claim 1, **characterized in that** at least two discrete temperature limit values (T₂, T₄) are provided.

3. Method according to claim 2, **characterized in that** the discrete temperature limit values (to, T₄) are associated with certain operating modes of the compressor (13) and/or the pressure medium system (1, 2, 3, 4, 5, 6, 7, 8, 9, 10, 14).

4. Method according to claim 2 or 3, **characterized in that** a main operating mode and a background operating mode are provided, and that in the background operating mode the temperature limit value (T₂) associated with that operating mode is lower than the limit value theoretically permissible as a result of the counter-pressure.

5. Method according to any one of claims 2 to 4, **characterized in that** the compressor (13) is arranged to be deactivated when a time period limit value (tₘₐₓ) is reached.

6. Method according to any one of the preceding claims, **characterized in that** after a deactivation operation the compressor (13) is re-activated after it has cooled to a preset re-activation temperature (T₁, T₃) and/or after a preset cooling time (t_{cool}) has elapsed.

7. Method according to claim 6, **characterized in that** the re-activation temperature (T₁, T₃) and/or the cooling time (t_{cool}) can be determined in dependence upon the operating mode.

8. Method according to any one of the preceding claims, **characterized in that** the temperature signal (T) is ascertained using a temperature sensor (16).

9. Method according to any one of the preceding claims, **characterized in that** the temperature signal (T) is ascertained by calculation using a thermal model.

10. Electronic control unit (12), which performs a method according to any one of the preceding claims.

## Revendications

1. Procédé pour la commande d'un compresseur (13) qui convient au refoulement d'un fluide sous pression dans une installation à fluide sous pression (1, 2, 3, 4, 5, 6, 7, 8, 9, 10, 14), le refoulement du fluide sous pression dans l'installation à fluide sous pression (1, 2, 3, 4, 5, 6, 7, 8, 9, 10, 14) pouvant être mis en service/hors service en fonction d'un signal de température (T), le refoulement de fluide sous pression étant mis hors service quand le signal de température (T) dépasse une valeur limite (T2), et la valeur limite (T2) est fixée en fonction de la contrepression provoquée par l'installation à fluide sous pression (1, 2, 3, 4, 5, 6, 7, 8, 9, 10, 14).

2. Procédé selon la revendication 1, **caractérisé en ce qu'**il est prévu au moins deux valeurs limite (T2, T4) pour la température.

3. Procédé selon la revendication 2, **caractérisé en ce que** les valeurs limite (T2, T4) pour la température sont associées à des modes de fonctionnement déterminés du compresseur (13) et/ou de l'installation à fluide sous pression (1, 2, 3, 4, 5, 6, 7, 8, 9, 10, 14).

4. Procédé selon la revendication 2 ou 3, **caractérisé en ce qu'**il est prévu un mode de fonctionnement principal et un mode de fonctionnement d'arrière-plan, et **en ce que** dans le mode de fonctionnement d'arrière-plan, la valeur limite (T2) associée à ce mode de fonctionnement est inférieure à la valeur limite théoriquement admissible en raison de la contrepression.

5. Procédé selon l'une des revendications 2 à 4, **caractérisé en ce que** le compresseur (13) est susceptible d'être mis hors service lorsqu'on atteint une valeur limite permanente (tₘₐₓ).

6. Procédé selon l'une des revendications précédentes, **caractérisé en ce qu'**une remise en service du compresseur (13) après une opération de mise hors service a lieu après refroidissement à une température de remise en service (T1, T3) prédéterminée et/ou après écoulement d'un temps de refroidissement (t_{abkühl}) prédéterminé.

7. Procédé selon la revendication 6, **caractérisé en ce que** la température de remise en service (T1, T3) et/ou le temps de refroidissement (t_{abkühl}) peut être fixé(e) en fonction du mode de fonctionnement.

8. Procédé selon l'une des revendications précédentes, **caractérisé en ce que** le signal de température (T) est déterminé par un capteur de température (16).

9. Procédé selon l'une des revendications précédentes, **caractérisé en ce que** le signal de température (T) est déterminé par calcul au moyen d'un modèle thermique.

10. Appareil de commande électronique (12) qui met en oeuvre un procédé selon l'une des revendications précédentes.
